Europäisches Patentamt

European Patent Office

Office européen des brevets

(19)

(11) **EP 1 169 795 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(21) Anmeldenummer: **00929287.1**

(22) Anmeldetag: **14.04.2000**

(51) Int Cl.⁷: **H04B 7/26**, H04J 3/06

(86) Internationale Anmeldenummer:
**PCT/DE00/01176**

(87) Internationale Veröffentlichungsnummer:
**WO 00/064074 (26.10.2000 Gazette 2000/43)**

(54) **VERFAHREN UND EINRICHTUNG ZUM SYNCHRONISIEREN EINES MOBILFUNKEMPFÄNGERS MIT EINER RAHMENSTRUKTUR EINES FUNKSIGNALS**

METHOD AND DEVICE FOR SYNCHRONISING A MOBILE RADIOTELEPHONE RECEIVER WITH A FRAME STRUCTURE OF A RADIO SIGNAL

PROCEDE ET DISPOSITIF POUR LA SYNCHRONISATION D'UN RECEPTEUR RADIO-MOBILE AVEC UNE STRUCTURE DE TRAME D'UN SIGNAL RADIO

(84) Benannte Vertragsstaaten:
**AT BE CH CY DE DK ES FI FR GB GR IE IT LI LU MC NL PT SE**

(30) Priorität: **16.04.1999 DE 19917337**

(43) Veröffentlichungstag der Anmeldung:
**09.01.2002 Patentblatt 2002/02**

(73) Patentinhaber: **Infineon Technologies AG**
**81669 München (DE)**

(72) Erfinder:
- **DOETSCH, Markus**
  **D-81539 München (DE)**
- **JUNG, Peter**
  **D-67697 Otterberg (DE)**
- **PLECHINGER, Jörg**
  **D-80469 München (DE)**
- **SCHMIDT, Peter**
  **D-67167 Erpolzheim (DE)**
- **SCHNEIDER, Michael**
  **D-81541 München (DE)**
- **KELLA, Tideya**
  **D-80337 München (DE)**

(74) Vertreter: **Lange, Thomas, Dr. et al**
**Patentanwälte**
**Lambsdorff & Lange**
**Dingolfinger Strasse 6**
**81673 München (DE)**

(56) Entgegenhaltungen:
**WO-A-99/00912**          **WO-A-99/12273**

**Beschreibung**

Die Erfindung betrifft ein Verfahren zum Synchronisieren eines Mobilfunkempfängers mit einer Rahmenstruktur eines von einer bestimmten einer Mehrzahl von Basisstationen erhaltenen Funksignals sowie eine Rahmen-Synchronisationseinrichtung für einen Mobilfunkempfänger.

Zum Betrieb eines Mobilfunksystems ist eine zeitliche Synchronisierung zwischen Basisstation und Mobilstation erforderlich. Dabei werden zwei Formen der Synchronität unterschieden: Die Frequenzsynchronität und die Rahmensynchronität. Die Erfindung betrifft ausschließlich die Rahmensynchronität. Die Rahmensynchronisierung erfolgt auf der Abwärtsstrecke, d.h. von der Basisstation (Sender) zu der Mobilstation (Empfänger). Rahmensynchronität bedeutet, daß die Mobilstation eine (in der Basisstation durch ein Datenstrukturierungsvorschrift vorgegebene) Rahmenstruktur des gesendeten Datenstroms im empfangenen Funksignal erkennt (d.h. zeitlich richtig erfaßt), wodurch sowohl eine rahmenbezogene Verarbeitung der empfangenen Datensymbole als auch eine zeitrichtige (d.h. mit der Basisstation synchronisierte) Rahmenbildung der zu sendenden Funksignale in der Mobilstation ermöglicht wird.

Aus dem Buch "Analyse und Entwurf digitaler Mobilfunksysteme" von P. Jung, Stuttgart, B.G. Teubner, 1997, Seite 236-237 ist bereits bekannt, die Rahmensynchronisation der Mobilstationen mittels sog. "Synchronization-Bursts" durchzuführen, die von den Basisstationen in regelmäßiger Wiederholung ausgesendet werden.

Bei CDMA-(Code Division Multiple Access)Systemen ist vorgeschlagen worden, zur Erzielung der Rahmensynchronität einen von allen Basisstationen gemeinsam genutzten Synchronisationskanal zu verwenden. Jede Basisstation sendet in fortwährender Wiederholung während jedes Rahmens eines Nutzsignals genau eine für die Basisstation charakteristische Folge bestehend aus einer vorgegebenen Anzahl N von Rahmen-Synchronisationscodes in den Synchronisationskanal aus. Die für alle Basisstationen identische Rahmenzeitdauer sowie die von den verschiedenen Basisstationen ausgesendeten unterschiedlichen Folgen sind der Mobilstation bekannt. Die Mobilstation erfaßt die zeitliche Lage der von einer bestimmten Basisstation ausgesendeten Rahmen des Nutzsignals, indem sie die von einem beliebigen Anfangszeitpunkt an über eine Rahmenzeitdauer detektierten Rahmen-Synchronisationscodes mit sämtlichen bekannten Folgen und mit sämtlichen N zyklischen Verschiebungen derselben korreliert und anschließend die (ggf. zyklisch verschobene) Folge mit maximaler Korrelation bestimmt. Die gefundene Folge maximaler Korrelation identifiziert einerseits die bestimmte Basisstation und ermöglicht andererseits die Rahmensynchronisation in der Mobilstation.

In den Druckschriften WO 99 12273 A und WO 99 00912 A werden Verfahren zur Synchronisierung von Mobilfunkempfängern mit einer Rahmenstruktur eines von einer bestimmten Mehrzahl von Basisstationen erhaltenen Funksignals beschrieben, die im wesentlichen nach den oben genannten Prinzipien arbeiten. Die erstgenannte dieser beiden Druckschriften offenbart hierfür eine Synchronisationseinrichtung mit einem Entzerrer und einem Decodierer mittels denen die von der bestimmten Basisstation gesendeten Rahmen-Synchronisationscodes in dem Mobilfunkempfänger detektiert und decodiert werden, einer Recheneinheit zur Durchführung von Berechnungen an den Rahmen-Synchronisationscodes und einer Rahmenzeitlage-Abgleicheinrichtung zur Synchronisation des Mobilfunkempfängers anhand der Folge von Rahmen-Synchronisationscodes mit der Rahmenstruktur des von einer Basisstation erhaltenen Funksignals.

Nachteilig an diesem Verfahren ist der hohe Rechenaufwand. Bei R Basisstationen (d.h. R verschiedenen Folgen) müssen für die Identifikation einer bestimmten Basisstation RN Korrelationsberechnungen und eine Maximumsuche ausgeführt werden.

Der Erfindung liegt die Aufgabe zugrunde, ein aufwandsgünstiges Verfahren zur Rahmensynchronisierung einer Mobilstation mit einer Basisstation anzugeben. Ferner zielt die Erfindung darauf ab, eine aufwandsgünstig arbeitende Einrichtung zur Rahmensynchronisierung einer Mobilstation mit einer Basisstation zu schaffen.

Die Aufgabe wird durch die Merkmale der Patentansprüche 1 und 6 gelöst.

Durch die Zuordnung eines Codekennwertes zu jedem detektierten Rahmen-Synchronisationscode wird eine einfache Identifikation der von der bestimmten Basisstation gesendeten Folge auf der Basis der N ermittelten Codekennwerte ermöglicht.

Eine rechenintensive Korrelationsanalyse über die Zeitdauer eines Rahmens ist dabei nicht erforderlich, so daß ein vergleichsweise geringer Rechenaufwand benötigt wird.

Der Begriff "paarweise verschiedene Folgen" bedeutet, daß sich je zwei (von verschiedenen Basisstationen stammende) Folgen in zumindest einem Rahmen-Synchronisationscode (unter Berücksichtigung der Reihenfolge derselben) unterscheiden.

Eine vorteilhafte Ausführungsform des erfindungsgemäßen Verfahrens kennzeichnet sich dadurch, daß die Mengen der in den Folgen enthaltenen Rahmen-Synchronisationscodes paarweise verschieden sind, daß zur Identifikation der von der bestimmten Basisstation gesendeten Folge eine gegenüber zyklischer Verschiebung der detektierten Rahmen-Synchronisationscodes invariante Funktion verwendet wird, und daß die Funktion auf die N erhaltenen Codekennwerte angewendet wird und der erhaltene Funktionswert die von der bestimmten Basisstation gesendete Folge identifiziert.

Vorzugsweise wird die bestimmte Basisstation gemäß einer Funktion

$$F(c1, .., cN) = \sum_{n=1}^{N} (K(cn))^{P}$$

ermittelt, wobei p eine natürliche Zahl mit p > 0, insbesondere p > 1 ist und K(c1), .., K(cN) die ermittelten Codekennwerte sind. Aufgrund der Invarianz dieser Funktionen gegenüber einer zyklischen Verschiebung der detektierten Rahmen-Synchronisationscodes ist es unerheblich, welcher der Rahmen-Synchronisationscodes einer Folge als (zeitlich) erster der N Codes detektiert wird.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Zeichnung beschrieben; in dieser zeigt:

Fig. 1     eine schematische Darstellung der Luftschnittstelle eines Mobilfunksystems mit einer Mobilstation und mehreren Basisstationen;

Fig. 2a     eine schematische Darstellung der Datenstruktur eines in dem Mobilfunksystem verwendeten Rahmens; und

Fig. 2b     eine schematische Darstellung eines Synchronisationskanals, in welchem das Eintreffen von ersten Synchronisationscodes und das Eintreffen von (zweiten) Rahmen-Synchronisationscodes eines Funksignals einer bestimmten Basisstation am Ort einer zu synchronisierenden Mobilstation über der Zeit aufgetragen ist.

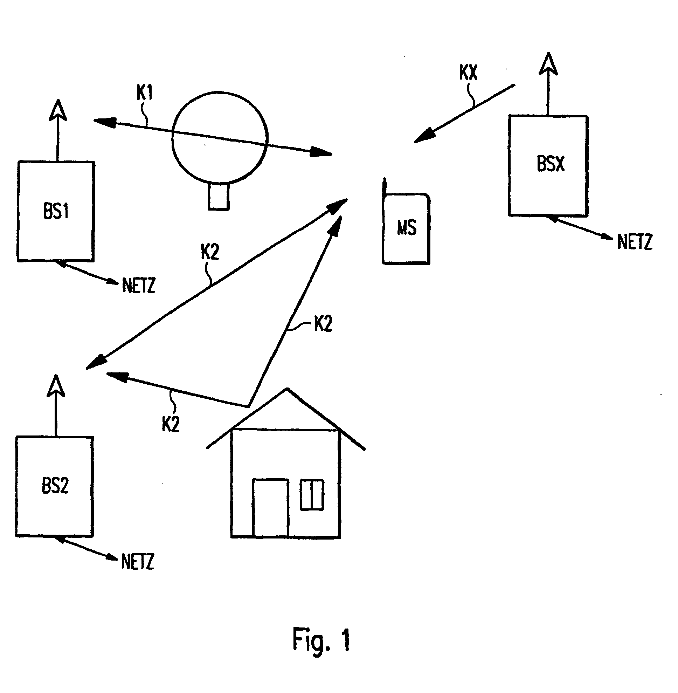

Fig. 1 zeigt in schematischer Darstellung die Luftschnittstelle eines zellularen Mobilfunksystems. Eine einem einzelnen Teilnehmer zugeordnete Mobilstation MS befindet sich im Funkbereich von mehreren Basisstationen BS1, BS2, .., BSX, .., die mit einem gemeinsamen Telekommunikationsnetz in Verbindung stehen. Die Kommunikationsverbindungen K1, K2, .., KX, .. zwischen den Basisstationen BS1, BS2, .., BSX, .. und der Mobilstation MS unterliegen einer Mehrwegeausbreitung.

Jede Basisstation BS1, BS2, .., BSX, .. steht mit einer Vielzahl weiterer Mobilstationen (nicht dargestellt) in Funkverbindung. Die über die Kommunikationsverbindungen K1, K2, .., KX, .. gesendeten Funksignale F sämtlicher Basisstationen weisen eine systemeinheitliche, d.h. konstruktiv identische Rahmenstruktur auf.

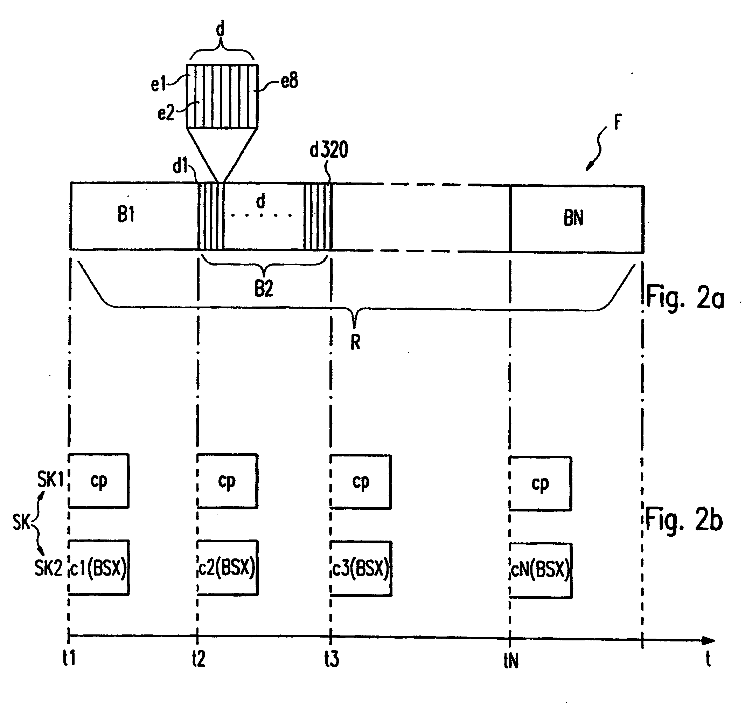

Fig. 2a zeigt ein Beispiel für eine solche Rahmenstruktur eines Funksignals F.

Das Funksignal F besteht aus einer Abfolge von einzelnen Datensymbolen (Bits) d. Ein Datenblock B1; B2; ..; BN wird aus einer systemstandardspezifischen Anzahl von Datensymbolen d (hier beispielsweise 320 Datensymbolen) gebildet. Ein Rahmen R wird aus einer systemstandardspezifischen Anzahl N von Datenblöcken B1, B2, .., BN aufgebaut. Beispielsweise kann ein Rahmen R aus N = 16 Datenblöcken B1, B2, .., B16 aufgebaut sein und umfaßt im vorliegenden Beispiel dann 5120 Datensymbole d.

Dem in Fig. 2a dargestellten Beispiel liegt ein CDMA-Funksignal F zugrunde. Dies bedeutet, daß jedes Datensymbol d mit einem teilnehmerspezifischen Spreizcode (CDMA-Code) spreizcodiert ist. Der Spreizcode umfaßt pro Datensymbol d beispielsweise 8 Chips e1, e2, .., e8.

Der gesamte in Fig. 2a dargestellte Rahmen/Block/Daten/Chip-Aufbau eines Funksignals F sowie die entsprechenden Rahmen/Block/Daten/Chip-Zeitdauern sind systemspezifisch vorgegeben und für die gesendeten Funksignale F aller Basisstationen BSi, i = 1, 2, .. identisch.

Wenn im Zusammenhang mit einer Gesprächsauf- oder -übernahme (Handover) eine bidirektionale Kommunikationsverbindung KX zwischen der Mobilstation MS und einer bestimmten Basisstation BSX (üblicherweise derjenigen mit der größten Empfangssignalstärke an der Mobilstation MS) aufgebaut werden soll, muß die Mobilstation MS zuvor mit der Rahmenstruktur des von der bestimmten Basisstation BSX erhaltenen Funksignals F synchronisiert werden, d.h. die Mobilstation MS muß in der Lage sein, Anfang und Ende eines erhaltenen Rahmens R zu erkennen.

Zur Erzielung einer solchen Rahmensynchronität wird ein für alle Basisstationen BSi gemeinsamer Synchronisationskanal SK verwendet (siehe Fig. 2b). Der Synchronisationskanal SK ist in zwei Kanäle SK1 und SK2 unterteilt.

Im ersten Kanal SK1 sendet jede Basisstation BSi in regelmäßigen Zeitabständen - beispielsweise am Anfang eines jeden Datenblocks B1, B2, .., BN - einen ersten Synchronisationscode cp aus. Der erste Synchronisationscode cp ist für alle Blöcke B1, B2, .., BN und alle Basisstationen BSi identisch. Die von der bestimmten Basisstation BSX ausgesendeten ersten Synchronisationscodes cp dienen dazu, allen "synchronisationswilligen" Mobilstationen MS ein Taktnormal bereitzustellen, das sie in die Lage versetzt, die von dieser (bestimmten) Basisstation BSX außerdem ausgesendeten, im folgenden noch näher erläuterten (zweiten) Rahmen-Synchronisationscodes zeitrichtig zu detektieren.

Da jeder Mobilstation MS die systemspezifische Blockzeitdauer bekannt ist, kann sie auch dann den Takt der bestimmten Basisstation BSX erfassen, wenn in dem ersten Kanal SK1 weitere erste Synchronisationscodes cp von anderen Basisstationen BSi auftreten.

Da der erste Synchronisationscode cp wie bereits erwähnt für alle Basisstationen BSi identisch ist, erlaubt er jedoch nicht die Identifikation der ihn aussendenden Basisstation.

Die Identifikation einer Basisstation BSi sowie die Rahmensynchronisation mit dieser wird über den zweiten Kanal SK2 erreicht. In diesem sendet jede Basisstation BSi eine in jedem Rahmen R identisch wiederkehrende Folge FBSi = (c1(BSi), c2(BSi), .., cN(BSi)) bestehend aus N Rahmen-Synchronisationscodes c1(BSi); c2(BSi); ..; cN(BSi) aus.

Die einzelnen Rahmen-Synchronisationscodes c1(BSi); c2(BSi); ..; cN(BSi) jeder Folge FBSi stammen aus einer K-elementigen Grundmenge M = {c1, c2, .., cK} paarweise verschiedener Rahmen-Synchronisationscodes c1, c2, .., cK, die systemstandardspezifisch vorgegeben ist und deren Elemente (die einzelnen Rahmen-Synchronisationscodes) sowohl in den Basisstationen BSi als auch in den Mobilstationen MS bekannt sind.

Die in der Grundmenge M enthaltenen Rahmen-Synchronisationscodes c1, c2, .., cK können beispielsweise orthogonale, unmodulierte Gold-Codes einer Länge von beispielsweise 256 Chips sein.

Die von jeder Basisstation BSi ausgesendete Folge FBSi ist für die aussendende Basisstation BSi spezifisch, d.h. unterscheidet sich von allen anderen Folgen FBSj der restlichen Basisstationen BSj, j = 1, 2, ..; j ≠ i, in jeweils mindestens einem Element (Rahmen-Synchronisationscode).

Die Unterschiedlichkeit von zwei Folgen FBSi, FBSj kann darauf beruhen, daß die beiden Folgen elementefremd sind, d.h. daß eine Folge mindestens einen Rahmen-Synchronisationscode enthält, den die andere nicht enthält. Andernfalls sind die zwei Folgen FBSi, FBSj elementegleich. Da derselbe Rahmen-Synchronisationscode c1; c2; ..; cK mehrfach in einer Folge auftreten kann, können sich auch elementegleiche Folgen FBSi, FBSj (durch eine unterschiedliche Anzahl identischer Rahmensynchronisationscodes) unterscheiden. Eine dritte Möglichkeit besteht darin, daß sich zwei Folgen FBSi, FBSj allein durch eine unterschiedliche Reihenfolge der Rahmen-Synchronisationscodes unterscheiden.

In den ersten beiden Fällen (elementefremde Folgen; elementegleiche Folgen mit unterschiedlicher Häufigkeit identischer Rahmen-Synchronisationscodes) sind die N-elementigen Mengen {c1(BSi), .., cN(BSi)} und {c1 (BSj), .., cN(BSj)} der jeweils in den Folgen FBSi, FBSj enthaltenen Rahmen-Synchronisationscodes verschieden.

Es ist ersichtlich, daß K kleiner, gleich oder größer als N sein kann.

Die Rahmensynchronisierung der Mobilstation MS mit der bestimmten Basisstation BSX wird nun anhand Fig. 2b beschrieben. Die in dem ersten Synchronisationskanal SK1 über der Zeit t dargestellten ersten Synchronisationscodes cp (von BSX) werden in der Mobilstation MS zu den Zeiten t1, t2,.., tN empfangen. Zum Auffinden des Rahmenanfangs muß nun in der Mobilstation MS zunächst die diese ersten Synchronisationscodes sendende bestimmte Basisstation (nämlich BSX) identifiziert werden. Dies erfolgt dadurch, daß - beginnend bei einem beliebigen Anfangstaktzeitpunkt (tl oder t2 oder ... oder tN) - N aufeinanderfolgende, jeweils zeitgleich mit ersten Synchronisationscodes cp einlaufende Rahmen-Synchronisationscodes c1, c2, .., cN detektiert und decodiert werden.

Die Detektion/Decodierung wird mittels eines adaptiven Entzerrers zur Rekonstruktion der ursprünglich gesendeten Chips sowie eines Decodierers zur Decodierung der einzelnen Rahmen-Synchronisationscodes c1, c2, .., cN durchgeführt.

Jedem detektierten Rahmen-Synchronisationscode c1, c2, .., cN wird dann ein codespezifischer Kennwert (Codekennwert) K(cn), n = 1, 2, .., N zugeordnet. Der zugeordnete Codekennwert K(cn) kann beispielsweise identisch mit dem (willkürlich vergebbaren) Index n eines Rahmen-Synchronisationscodes cn der Grundmenge M sein, d.h. K(cn) = n.

Nachfolgend wird die Identität der bestimmte Basisstation BSX allein anhand der N ermittelten Codekennwerte K(c1), K(c2), .., K(cN) ermittelt.

Zu diesem Zweck wird eine gegenüber zyklischen Verschiebungen der ermittelten Codekennwerte K(c1), K(c2), .., K(cN) invariante Funktion, beispielsweise

$$F(c1, \ .., \ cN) \ = \ \sum_{n=1}^{N} (K(cn))^{p}$$

mit z.B. p = 2 herangezogen. Aufgrund der Invarianz gegenüber zyklischer Verschiebungen der ermittelten Codekennwerte gilt

F(c1, .., cN) = F(FBSX)

Die Folgen FBSi der Basisstationen BSi und die Zuordnungsvorschrift K(cn) sind so zu wählen, daß die Funktionswerte F(FBSi) für alle Folgen FBSi unterschiedlich sind. In diesem Fall bezeichnet der Funktionswert F(FBSi) eindeutig die zugehörige Basisstation BSi, d.h. identifiziert diese.

In dem in Fig. 2b dargestellten Fall wird also ein Funktionswert F(FBSX) erhalten, der eindeutig angibt, daß die ersten und zweiten Synchronisationscodes cp bzw. cn(BSX) von der Basisstation BSX stammen.

Die Synchronisation der Mobilstation MS mit der bestimmten Basisstation BSX wird dann dadurch bewirkt, daß die zeitliche Lage der intern in der Mobilstation MS (zum Empfangen und/oder Senden eines Nutzsignals) verwendeten Rahmenstruktur mit dem Anfangszeitpunkt (t1) und dem Endzeitpunkt (tN) der erkannten Folge FBSX abgeglichen wird. Hierfür muß - beispielsweise - der am Rahmenanfang t1 liegende erste Rahmen-Synchronisationscode c1(BSX) der erkannte Folge FBSX in der Mobilstation MS bekannt und in der Folge FBSX einzigartig sein. Die Verwendung von einem oder mehreren anderer in der Folge FBSX einzigartigen Bezugs-Rahmen-Synchronisationscodes cn(BSX) mit bekanntem zeitlichen Abstand tn-t1 zum Rahmenanfang ist natürlich genauso gut möglich.

Das erfindungsgemäße Verfahren wurde gemäß Fig. 2a und 2b an einem Beispiel erläutert, bei dem die Anzahl N der Blöcke in einem Rahmen mit der Anzahl N der Rahmen-Synchronisationscodes cn(BSi) einer Folge FBSi übereinstimmt. Dies ist für die vorliegende Erfindung jedoch keinesfalls erforderlich.

Ferner wird darauf hingewiesen, daß das erfindungsgemäße Verfahren an einem DS- (Direct Sequencing-) CDMA Funk- bzw. Nutzsignal (siehe Fig. 2a) erläutert wurde, es jedoch offensichtlich ist, daß es auch bei anderen bekannten CDMA-Verfahren, beispielsweise FH-(Frequency Hopping: Frequenzsprung-)CDMA oder MC-(Multicarrier Code: Multiträger-)CDMA sowie generell auch bei anderen Vielfachzugriffsverfahren (TDMA, FDMA) eingesetzt werden kann.

Zur Implementierung des erfindungsgemäßen Verfahrens in einen Mobilfunkempfänger wird dieser mit einer (üblicherweise durch Software realisierten) Zuordnungslogik ausgestattet, welche die Aufgabe übernimmt, den einzelnen, detektierten und decodierten Rahmen-Synchronisationscodes c1, .., cN die Codekennwerte K(c1), .., K(cN) zuzuordnen. Eine Recheneinheit führt die Berechnung des Funktionswertes der Funktion F durch, welcher die empfangene Folge FBSX und damit die Basisstation BSX identifiziert. Die Rahmensynchronisation des Mobilfunkempfängers wird dann von einer Rahmenzeitlage-Abgleicheinrichtung anhand eines oder mehrerer charakteristischer Zeitpunkte (beispielsweise der Anfangs- und/oder Endzeitpunkt) des identifizierten Rahmens ausgeführt.

**Patentansprüche**

**1.** Verfahren zum Synchronisieren eines Mobilfunkempfängers mit einer Rahmenstruktur eines von einer bestimmten (BSX) einer Mehrzahl von Basisstationen (BS1, BS2, .. ) erhaltenen Funksignals (F),
   wobei

   - jede Basisstation (BSi) pro Rahmen (R) eine vorgegebene Folge (FBSi) bestehend aus N Rahmen-Synchronisationscodes ((c1(BSi), .., cN(BSi)) sendet, und
   - je zwei von verschiedenen Basisstationen (BSi; BSj) gesendete Folgen (FBSi; FBSj) sich zumindest in einem Rahmensynchronisationscode unterscheiden;

   bei dem:

   - von der bestimmten Basisstation (BSX) gesendete Rahmen-Synchronisationscodes (c1, .., cN) in dem Mobilfunkempfänger (MS) detektiert und decodiert werden;
   - jedem detektierten und decodierten Rahmen-Synchronisationscode (c1; ..; cN) ein für den Code charakteristischer Codekennwert (K(c1); ..; K(cN)) zugeordnet wird;
   - die von der bestimmten Basisstation (BSX) gesendete Folge (FBSX) auf der Basis von N aufeinanderfolgend erhaltenen Codekennwerten (K(c1), .., K(cN)) identifiziert wird; und
   - der Mobilfunkempfänger (MS) anhand der identifizierten Folge (FBSX) von Rahmen-Synchronisationscodes mit der RahmenStruktur des von der bestimmten Basisstation (BSX) erhaltenen Funksignals (F) synchronisiert wird;
   - indem die seitliche Lage der in dem Mobilfunkempfänger (MS) verwendeten Rahmenstruktur mit dem Anfangszeitpunkt (t1) und dem Endzeitpunkt (tN) der identifizierten Folge (FBSX) abgeglichen wird.

**2.** Verfahren nach Anspruch 1,
   **dadurch gekennzeichnet,**

- **daß** die Mengen der in den Folgen (FBSi) enthaltenen Rahmensynchronisationscodes paarweise verschieden sind,
- **daß** zur Identifikation der von der bestimmten Basisstation (BSX) gesendeten Folge (FBSX) eine gegenüber zyklischer Verschiebung der detektierten Rahmen-Synchronisationscodes (c1, .., cN) invariante Funktion verwendet wird, und
- **daß** die Funktion auf die N erhaltenen Codekennwerte angewendet wird und der erhaltene Funktionswert die von der bestimmten Basisstation (BSX) gesendete Folge (FBSX) identifiziert.

3. Verfahren nach Anspruch 2,
   **dadurch gekennzeichnet,**
   **daß** die Funktion

$$F(c1, .., cN) = \sum_{n=1}^{N} (K(cn))^p$$

lautet, wobei p eine natürliche Zahl mit p > 0, insbesondere p > 1 ist und K(c1), .., K(cN) die ermittelten Codekennwerte sind.

4. Verfahren nach einem der vorhergehenden Ansprüche,
   **dadurch gekennzeichnet,**
   **daß** der Synchronisationsschritt die Schritte umfaßt:

   - Bestimmen wenigstens eines Bezugs-Rahmen-Synchronisationscodes der identifizierten Folge (FBSX) mit bekanntem zeitlichen Abstand zum Rahmenanfang, und
   - Synchronisieren des Mobilfunkempfängers an diesem Bezugs-Rahmen-Synchronisationscode.

5. Verfahren nach einem der vorhergehenden Ansprüche,
   **dadurch gekennzeichnet,**
   **daß** die Rahmen-Synchronisationscodes (c1, c2, .., cK) orthogonale Gold-Codes sind.

6. Einrichtung zum Synchronisieren eines Mobilfunkempfängers mit einer Rahmenstruktur eines von einer bestimmten (BSX) einer Mehrzahl von Basisstationen (BS1, BS2, .. ) erhaltenen Funksignals (F), wobei

   - jede Basisstation (BSi) pro Rahmen (R) eine vorgegebene Folge (FBSi) bestehend aus N Rahmen-Synchronisationscodes ((c1(BSi), .., cN(BSi)) sendet, und die Einrichtung aufweist:

   - einen Entzerrer und Decodierer, mittels denen die von der bestimmten Basisstation (BSX) gesendeten Rahmen-Synchronisationscodes (c1, .., cN) in dem Mobilfunkempfänger (MS) detektiert und decodiert werden;
   - eine Recheneinheit zur Durchführung von Berechnungen an den Rahmen-Synchronisationscodes;
   - eine Rahmenzeitlage-Abgleicheinrichtung zur Synchronisierung des Mobilfunkempfängers anhand der Folge von Rahmen-Synchronisationscodes,

     **dadurch gekennzeichnet, daß**

   - je zwei von verschiedenen Basisstationen (BSi; BSj) gesendete Folgen (FBSi; FBSj) sich zumindest in einem Rahmen-Synchronisationscode unterscheiden,
   - eine Zuordnungslogik jedem detektierten und decodierten Rahmen-Synchronisationscode (c1; ..; cN) einen für den Code charakteristischen Codekennwert (K(c1); ..; K(cN)) zuordnet;
   - die Recheneinheit die von der bestimmten Basisstation (BSX) gesendete Folge (FBSX) auf der Basis einer auf den N aufeinanderfolgend erhaltenen Codekennwerten (K(c1), .., K(cN)) durchgeführten Berechnung identifiziert; und
   - die Rahmenzeitlage-Abgleicheinrichtung den Mobilfunkempfänger (MS) anhand der identifizierten Folge (FBSX) von Rahmen-Synchronisationscodes mit der Rahmenstruktur des von der bestimmten Basisstation (BSX) erhaltenen Funksignals (F) synchronisiert, indem sich die zeitliche Lage der in dem Mobilfunkempfänger (MS) verwendeten Rahmenstruktur mit dem Anfangszeitpunkt (t1) und dem Endzeitpunkt (tN) der identifizierten Folge (FBSX) abgleicht.

**Claims**

1. Method for synchronizing a mobile radio receiver with a frame structure of a radio signal (F) received from one specific base station (BSX) of a plurality of base stations (BS1, BS2, ..),
   whereby,

   - each base station (BSi) transmits a predefined sequence (FBSi) for each frame (R), comprising N frame synchronization codes ((c1(BSi), .., cN(BSi)), and
   - in each case two sequences (FBSi; FBSj) transmitted by different base stations (BSi; BSj) differ from one another in terms of at least one frame synchronization code,

   in which:

   - frame synchronization codes (c1, .., cN) transmitted by the specific base station (BSX) are detected and decoded in the mobile radio receiver (MS);
   - a code parameter (K(c1); K(c2); ..; K(cN)) characteristic of the code is allocated to each detected and decoded frame synchronization code (c1; ..; cN)
   - the sequence (FBSX) transmitted by the specific base station (BSX) is identified on the basis of N consecutively received code parameters (K(c1), .., K(cN)), and
   - the mobile radio receiver (MS) is synchronized with the frame structure of the radio signal received from the specific base station (BSX) using the identified sequence (FBSX) of frame synchronization codes (F);
   - the timing of the frame structure used in the mobile receiver (MS) is aligned with the start time (t1) and the end time (tN) of the identified sequence (FBSX).

2. Method according to Claim 1,
   **characterized in that**

   - the quantities of the frame synchronization codes contained in the sequences (FBSi) differ in pairs,
   - in order to identify the sequence (FBSX) transmitted by the specific base station (BSX), a function which is invariant compared with a cyclical shift of the detected frame synchronization codes (c1, .., cN) is used, and
   - the function is applied to the N received code parameters and the received function value identifies the sequence transmitted by the specific base station (BSX).

3. Method according to Claim 2,
   **characterized in that**
   the function is

$$F(c1, .., cN) = \sum_{n=1}^{N} (K(cn))^p ,$$

   where p is a natural number where p > 0, in particular p > 1, and K(cl), .., K(cN) are the determined code parameters.

4. Method according to one of the previous claims,
   **characterized in that**
   the synchronization step comprises the following steps:

   - Definition of at least one reference frame synchronization code of the identified sequence (FBSX) with a known temporal spacing from the frame start, and
   - synchronization of the mobile radio receiver with this reference frame synchronization code.

5. Method according to one of the previous claims,

**characterized in that**

the frame synchronization codes (c1, c2, .., cK) are orthogonal gold codes.

6. Device for synchronizing a mobile radio receiver with a frame structure of a radio signal (F) received from one specific base station (BSX) of a plurality of base stations (BS1, BS2, ..),
   whereby,

   - each base station (BSi) transmits a predefined sequence (FBSi) for each frame (R) comprising N frame synchronization codes ((c1(BSi), .., cN(BSi), and the device has:

   - an equalizer and a decoder, by means of which the frame synchronization codes (c1, .., cN) transmitted by the specific base station (BSX) are detected and decoded in the mobile radio receiver (MS);
   - a computing unit to perform calculations on the frame synchronization codes;
   - a frame timing alignment device for synchronizing the mobile radio receiver using the sequence of frame synchronization codes,

   **characterized in that**

   - in each case two sequences (FBSi; FBSj) transmitted by different base stations (Bsi; BSj) differ from another in terms of at least one frame synchronization code,
   - allocation logic allocates a code parameter (K(c1), .., K(cN)) characteristic of the code to each detected and decoded frame synchronization code (c1; ..; cN),
   - the computing unit identifies the sequence (FBSX) transmitted by the specific base station (BSX) on the basis of a calculation performed on the N consecutively received code parameters (K(c1), .., K(cN)), and
   - the frame timing alignment device synchronizes the mobile radio receiver (MS) using the identified sequence (FBSX) of frame synchronization codes with the frame structure of the radio signal received from the specific base station (BSX) by aligning the timing of the frame structure used in the mobile radio receiver (MS) with the start time (t1) and the end time (tN) of the identified sequence (FBSX).

## Revendications

1. Procédé pour la synchronisation d'un récepteur de radiocommunication mobile avec une structure de trame d'un signal radio (F) obtenu d'une station de base déterminée (BSX) parmi plusieurs stations de base (BS1, BS2, ...),
   dans lequel

   - chaque station de base (BSi) envoie par trame (R) une séquence prédéterminée (FBSi) constituée de N codes de synchronisation de trame (c1 (BSi), ..., cN (BSi)), et
   - à chaque fois deux séquences (FBSi ; FBSj) envoyées par différentes stations de base (BSi ; BSj) se distinguent au moins par un code de synchronisation de trame ;
   - des codes de synchronisation de trame (c1, ..., cN) envoyés par la station de base déterminée (BSX) sont détectés et décodés dans le récepteur de radiocommunication mobile (MS) ;
   - une valeur caractéristique de code (K (c1); ... ; K (cN)) caractéristique pour le code est associée à chaque code de synchronisation de trame (c1 ; .. ; cN) détecté et décodé ;
   - la séquence (FBSX) envoyée par la station de base déterminée (BSX) est identifiée sur la base de N valeurs caractéristiques de codes (K (c1), ..., K (cN)) obtenues successivement ; et
   - le récepteur de radiocommunication mobile (MS) est synchronisé à l'aide de la séquence identifiée (FBSX) de codes de synchronisation de trame avec la structure de trame du signal radio (F) obtenu de la station de base déterminée (BSX) ;
   - du fait que la position temporelle de la structure de trame utilisée dans le récepteur de radiocommunication mobile (MS) est alignée sur l'instant de début (t1) et l'instant de fin (tN) de la séquence identifiée (FBSX).

2. Procédé selon la revendication 1,
   **caractérisé par le fait que**

   - les ensembles des codes de synchronisation de trame contenus dans les séquences (FBSi) sont différents paire par paire,
   - pour l'identification de la séquence (FBSX) envoyée par la station de base déterminée (BSX), on utilise une fonction invariante par rapport au décalage cyclique des codes de synchronisation de trame (c1, ..., cN) détectés, et
- la fonction est appliquée aux N valeurs caractéristiques de codes obtenues et la valeur de fonction obtenue identifie la séquence (FBSX) envoyée par la station de base déterminée (BSX).

3. Procédé selon la revendication 2,
   **caractérisé par le fait que** la fonction est

$$F\ (c1,\ ...,\ cN) = \sum_{n=1}^{N} (K\ (cn))^{p}$$

p étant un nombre naturel avec p > 0, notamment p > 1, et K (c1), ..., K (cN) étant les valeurs caractéristiques de codes déterminées.

4. Procédé selon l'une des revendications précédentes,
   **caractérisé par le fait que** l'étape de synchronisation comprend les étapes suivantes :

   - détermination d'au moins un code de synchronisation de trame de référence de la séquence identifiée (FBSX), la distance temporelle jusqu'au début de trame étant connue, et
   - synchronisation du récepteur de radiocommunication mobile sur ce code de synchronisation de trame de référence.

5. Procédé selon l'une des revendications précédentes,
   **caractérisé par le fait que** les codes de synchronisation de trame (c1, c2, ..., cK) sont des codes Gold orthogonaux.

6. Dispositif pour la synchronisation d'un récepteur de radiocommunication mobile avec une structure de trame d'un signal radio (F) obtenu d'une station de base déterminée (BSX) parmi plusieurs stations de base (BS1, BS2, ...), dans lequel

   - chaque station de base (BSi) envoie par trame (R) une séquence prédéterminée (FBSi) constituée de N codes de synchronisation de trame (c1 (BSi), ..., cN (BSi)) et le dispositif comporte :
   - un correcteur et décodeur au moyen desquels les codes de synchronisation de trame (c1, ..., cN) envoyés par la station de base déterminée (BSX) sont détectés et décodés dans le récepteur de radiocommunication mobile (MS) ;
   - une unité de calcul pour la mise en oeuvre de calculs sur les codes de synchronisation de trame ;
   - un dispositif d'alignement de position temporelle de trame pour la synchronisation du récepteur de radiocommunication mobile à l'aide de la séquence de codes de synchronisation de trame,

   **caractérisé par le fait que**

   - à chaque fois deux séquences (FBSi ; FBSj) envoyées par différentes stations de base (BSi ; BSj) se distinguent au moins par un code de synchronisation de trame,
   - une logique d'association associe à chaque code de synchronisation de trame (c1 ; ... ; cN) détecté et décodé une valeur caractéristique de code (K (c1); ... ; K (cN)) caractéristique pour le code ;
   - l'unité de calcul identifie la séquence (FBSX) envoyée par la station de base déterminée (BSX) sur la base d'un calcul effectué sur les N valeurs caractéristiques de codes (K(c1), ..., K (cN)) obtenues successivement ; et
   - le dispositif d'alignement de position temporelle de trame synchronise le récepteur de radiocommunication mobile (MS) à l'aide de la séquence identifiée (FBSX) de codes de synchronisation de trame avec la structure de trame du signal radio (F) obtenu de la station de base déterminée (BSX) du fait que la position temporelle de la structure de trame utilisée dans le récepteur de radiocommunication mobile (MS) s'aligne sur l'instant de début (t1) et l'instant de fin (tN) de la séquence identifiée (FBSX).

Fig. 1

Fig. 2a

Fig. 2b